# EUROPÄISCHE PATENTANMELDUNG

(11) **EP 4 635 760 A1**
(43) Veröffentlichungstag der Anmeldung: **22.10.2025**
(21) Anmeldenummer: 25170016.7
(22) Anmeldetag: 11.04.2025
(51) Int. Cl.: B60G 21/055

(54) **STABILISATOR FÜR EIN FAHRWERK EINES KRAFTFAHRZEUGS UND VERFAHREN ZUM HERSTELLEN EINES STABILISATORS**

(30) Priorität: 15.04.2024 DE 102024110522
(71) Anmelder: Muhr und Bender KG, 57439 Attendorn (DE)
(72) Erfinder: SCHUBERT, Carsten, 99089 Erfurt (DE); MACEDO, Sergio, 99631 Weißensee (DE); DOBERT, Stefan, 06526 Sangerhausen (DE); LIETZ, Marko, 58239 Schwerte (DE)
(74) Vertreter: Neumann Müller Oberwalleney Patentanwälte PartG mbB

(57) **Zusammenfassung**

Die Erfindung betrifft einen Stabilisator für ein Fahrwerk eines Kraftfahrzeugs, mit einem Stabilisatorrohr (2), und einem an einem ersten Endabschnitt (3) angeordneten Kopplungselement (5) mit einem Einsteckabschnitt (19), einem Fügeabschnitt (6) und einem Verbindungsmittel (7) zum lösbaren Verbinden eines Anschlusselements (8), wobei zwischen dem Einsteckabschnitt (19) und dem Stabilisatorrohr (2) ein Radialspalt (21) gebildet ist, und wobei das Kopplungselement (5) mit dem Stabilisatorrohr (2) über eine mittels Kondensator-Entladungsschweißens oder Laserschweißens zwischen dem Fügeabschnitt (6) und dem Stabilisatorrohr (2) erzeugte Schweißverbindung (30) verbunden ist.

## Beschreibung

Die Erfindung betrifft einen Stabilisator für ein Fahrwerk eines Kraftfahrzeugs sowie ein Verfahren zum Herstellen eines Stabilisators.

Stabilisatoren werden beispielsweise dazu eingesetzt, den Wankwinkel eines Kraftfahrzeugs zu reduzieren oder das Fahrverhalten eines Kraftfahrzeugs, insbesondere das Eigenlenkverhalten, zu beeinflussen.

Ein derartiger Stabilisator ist zum Beispiel aus der EP 3 508 361 A1 bekannt. Dort umfasst der Stabilisator eine Stabilisatorstange und eine Stabilisatorverbindung, die die Stabilisatorstange mit einer Aufhängungsvorrichtung koppelt. Hierzu weist die Stabilisatorverbindung einen Kugelzapfen mit einem Schaftabschnitt und einem Kugelabschnitt auf. Der Schaftabschnitt ist in ein offenes Ende der Stabilisatorstange eingesetzt und darin befestigt. In einer Ausführungsform ist ein Anschlussende des Schaftabschnitts mit einer Kegelfläche versehen, die auf das Öffnungsende der Stabilisatorstange gepresst und mit der Stabilisatorstange verschweißt wird. Gemäß einer anderen Ausführungsform wird eine Hülse durch Presspassen in das Öffnungsende der Stabilisatorstange eingesetzt und auf den Schaftabschnitt gepasst.

Aus der DE 10 2019 103 573 A1 ist eine Stabilisatoranordnung für ein Fahrwerk eines Kraftfahrzeugs bekannt, die eine Torsionsfeder mit einem rohrförmigen Endabschnitt und ein Anbindungselement, das mittels einer Spannanordnung mit der Torsionsfeder lösbar verbunden ist, umfasst. Die Spannanordnung weist ein Konuselement und ein Spreizelement mit zwei Spreizarmen auf.

Aus der US 6,533,301 B1 ist ein Stabilisator bekannt, bei dem an ein Endadapter stirnseitig an ein Ende des Stabilisatorrohrs angeschweißt ist. Der Endadapter umfasst eine Bohrung mit Innengewinde, in das ein Kugelkopf eingeschraubt ist.

Aus der FR 2 761 009 A1 ist ein ähnlicher Stabilisator mit endseitig eingestecktem zylindrischem Einsatz mit Innengewinde bekannt.

Der Erfindung liegt die Aufgabe zugrunde, einen dichten und robusten Stabilisator für ein Fahrwerk eines Kraftfahrzeugs bereitzustellen, der flexibel einsetzbar und einfach herzustellen ist.

Gemäß einer ersten Lösung wird ein Stabilisator für ein Fahrwerk eines Kraftfahrzeugs, vorgeschlagen umfassend: ein Stabilisatorrohr mit einem Endabschnitt und einer Rohrachse, sowie ein Kopplungselement mit einem Einsteckabschnitt, einem konusförmigen Fügeabschnitt und einem Verbindungsmittel zum lösbaren Verbinden eines Anschlusselements, wobei das Kopplungselement mit seinem Einsteckabschnitt in dem Endabschnitt des Stabilisatorrohrs angeordnet ist, wobei zwischen dem Einsteckabschnitt und einer Innenwand des Stabilisatorrohrs ein Radialspalt ausgebildet ist, und wobei das Kopplungselement mit dem Stabilisatorrohr über eine mittels Kondensator-Entladungsschweißens erzeugte Schweißverbindung zwischen dem konusförmigen Fügeabschnitt und dem Stabilisatorrohr gefügt ist.

Gemäß einer alternativen zweiten Lösung wird ein Stabilisator für ein Fahrwerk eines Kraftfahrzeugs, vorgeschlagen umfassend: ein Stabilisatorrohr mit einem Endabschnitt und einer Rohrachse, ein Kopplungselement mit einem Einsteckabschnitt, einem flanschförmigen Fügeabschnitt und einem Verbindungsmittel zum lösbaren Verbinden eines Anschlusselements, wobei das Kopplungselement mit seinem Einsteckabschnitt in dem Endabschnitt des Stabilisatorrohrs angeordnet ist, wobei zwischen dem Einsteckabschnitt und einer Innenwand des Stabilisatorrohrs ein Radialspalt ausgebildet ist, und der flanschförmigen Fügeabschnitt einen größeren Außendurchmesser aufweist als der Endabschnitt des Stabilisatorrohrs, wobei das Kopplungselement mit dem Stabilisatorrohr über eine mittels Laserschweißens zwischen dem flanschförmigen Fügeabschnitt und einer Stirnseite des Stabilisatorrohrs erzeugten axialen Schweißverbindung gefügt ist.

Der Fügeabschnitt des Kopplungselements ermöglicht bei beiden Lösungen, dass das Kopplungselement mit Stabilisatorrohren verschiedener Durchmesser verbunden werden kann. Hierdurch kann der Stabilisator flexibel an die Voraussetzungen für unterschiedliche Kraftfahrzeuge angepasst werden. Indem das Kopplungselement mittels Kondensator-Entladungsschweißen bzw. Laserschweißen mit dem Stabilisatorrohr verbunden ist, wird die wärmebelastete Fügezone im Bereich der Schweißnaht verringert, wodurch materialschwächende Gefügeveränderungen des Stabilisatorrohrs reduziert werden. Weiter gewährleistet die Schweißverbindung zwischen dem konusförmigen bzw. flanschförmigen Fügeabschnitt des Kopplungselements und dem Stabilisatorrohr, dass der Endabschnitt des Stabilisatorrohrs flüssigkeitsdicht, bzw. gasdicht verschlossen ist. Durch Kondensatorentladungsschweißen kann ein sehr stabiler Schweißprozess ermöglicht werden, da der Schweißprozess aufgrund des Kondensators vom Stromnetz entkoppelt ist. Durch Laserschweißen kann eine genaue und schnelle Schweißverbindung erzeugt werden.

Das Kopplungselement ist an einer Stirnfläche des Stabilisatorrohrs angeordnet, wobei gemäß der ersten Lösung der konusförmige Fügeabschnitt des Kopplungselements insbesondere mit einer Innenkante des Stabilisatorrohrs verbunden ist, und gemäß der zweiten Lösung der flanschförmige Fügeabschnitt des Kopplungselements insbesondere mit einer Stirnfläche des Stabilisatorrohrs verbunden ist. Bei der zweiten Lösung ist die Schweißverbindung vorzugsweise durch eine ringförmig um die Längsachse des Kopplungselements umlaufende Schweißnaht gebildet. Das Laserschweißen erfolgt in axiale Richtung, das heißt, der Laserstrahl strahlt axial durch den Flanschabschnitt hindurch in die Stirnseite des Rohres hinein, so dass die Stirnseite des Rohres mit der Unterseite des Flanschabschnitts verschmilzt und stoffschlüssig verbunden wird. Der Laserstrahl wird ringförmig in Überdeckung mit der Stirnseite geführt, so dass eine umlaufend dichte Schweißverbindung erzeugt wird. Vorzugsweise wird die Schweißnaht in Axialansicht auf das Rohrende bzw. im Querschnitt durch den Endabschnitt betrachtet insbesondere radial außerhalb einer mittleren Ringlinie des Rohres bzw. dessen Endabschnitts angeordnet. Die Schweißnaht kann beim Laserschweißen einen Durchmesser von weniger als 0,75 mm aufweisen.

Der Fügeabschnitt hat in radialer Richtung zur Längsachse des Kopplungselements eine Radialhöhe bzw. -erstreckung, die größer als das 2-fache und/oder kleiner als das 5-fache der Wandungsdicke des Stabilisatorrohrs sein kann. Als Radialhöhe kann bei der ersten Lösung der Abstand zwischen dem kleinsten Radius und dem größten Radius des konusförmigen Verbindungabschnitts und bei der zweiten Lösung der Abstand zwischen der Außenfläche des Einsteckabschnitts und der Außenfläche des Flanschabschnitts verstanden werden. Die Radialhöhe kann in Abhängigkeit von der erforderlichen Gewindegröße des Innengewindes ausgelegt sein. Beispielsweise kann der Fügeabschnitt bei einem Innengewinde mit einer Größe von M8 eine Radialhöhe von mindestens 3 mm und/oder bis zu 6 mm aufweisen, insbesondere zwischen 4 mm und 5 mm. Bei einem Innengewinde mit einer Größe von M13 kann der Fügeabschnitt beispielsweise eine Radialhöhe von mindestens 7 mm und/oder bis zu 10 mm aufweisen, insbesondere zwischen 8 mm bis 9 mm. Die Wandungsdicke des Stabilisatorrohrs beschreibt den Abstand zwischen einer Innenfläche der Innenwand und einer Außenfläche einer Außenwand des Stabilisatorrohrs. Sie kann beispielsweise mindestens 2 mm und/oder maximal 7 mm betragen, ohne darauf beschränkt zu sein.

Das Stabilisatorrohr beschreibt ein im Wesentlichen zylinderförmiges Bauteil mit einem sich in Längsrichtung des Stabilisatorrohrs zwischen einem ersten Endabschnitt und einem zweiten Endabschnitt erstreckenden, beispielsweise ellipsenförmigen oder kreisförmigen Querschnitt. Vorzugsweise ist das Stabilisatorrohr an einer oder mehreren Biegestellen gebogen. Beispielsweise weist das Stabilisatorrohr zwei Biegestellen auf.

Das Kopplungselement ist zur lösbaren Verbindung des Stabilisatorrohrs mit dem Anschlusselement ausgebildet und kann auch als Verbindungs- oder Adapterelement bezeichnet werden. Das Anschlusselement kann beispielsweise ein Kugelzapfen einer Koppelstange sein. Vorzugsweise ist das Kopplungselement zumindest teilweise an bzw. in dem ersten Endabschnitt des Stabilisatorrohres angeordnet.

Das Verbindungsmittel ist an oder vorzugsweise in dem Kopplungselement gebildet. Bevorzugt ist das Verbindungsmittel derart gestaltet, dass das Anschlusselement lösbar mit dem Kopplungselement verbunden werden kann. Das Anschlusselement und das Kopplungselement sind vorzugsweise über kraft- und/oder formschlüssige Verbindungsmittel miteinander verbindbar, beispielsweise eine Schraubverbindung.

Über die Schweißverbindung, die durch eine Schweißnaht erkennbar ist, ist das Kopplungselement mit dem Stabilisatorrohr verbunden. Die Schweißverbindung zwischen dem konus- bzw. flanschförmigen Fügeabschnitt des Kopplungselements und dem Stabilisatorrohr ist im Bereich des ersten Endabschnitts des Stabilisatorrohrs angeordnet.

Die Schweißverbindung zwischen dem Stabilisatorrohr und dem Kopplungselement gewährleistet bevorzugt eine Dichtheit, die 2 bar Innendruck erreicht und nach 5 Minuten noch mindestens das 0,75-fache des maximal aufgebrachten Drucks beträgt.

Das Stabilisatorrohr erstreckt sich von einer an dem ersten Endabschnitt angeordneten ersten Stirnfläche zu einer an dem zweiten Endabschnitt angeordneten zweiten Stirnfläche. Die Stirnfläche des Stabilisatorrohrs beschreibt einen abschließenden Querschnitt des Stabilisatorrohrs. Unter einem Endabschnitt des Stabilisatorrohrs wird insbesondere ein sich von einer Stirnfläche in Längsrichtung des Stabilisatorrohrs erstreckender gerader Abschnitt verstanden. Beispielsweise kann sich der Endabschnitt ausgehend von der ersten Stirnfläche über eine Länge von mindestens 20 mm, 40 mm, 50 mm oder mehr erstrecken. Die Innenkante des Stabilisatorrohrs kann eine an einen Innenraum des Stabilisatorrohrs angrenzende Kante der ersten Stirnfläche sein. Die stirnflächenseitige Anordnung des Kopplungselements an dem Stabilisatorrohr ermöglicht, dass auf eine Bearbeitung des Endabschnitts des Stabilisatorrohrs, beispielsweise ein Verpressen des Endabschnitts, verzichtet werden kann. Hierdurch ist der Stabilisator besonders einfach herzustellen.

Gemäß einer möglichen Ausgestaltung kann das Kopplungselement eine über die Stirnfläche des Stabilisatorrohrs in axialer Richtung des Stabilisatorrohrs vorstehende Anschlussfläche aufweisen, um das Anschlusselement axial abzustützen. Die Anschlussfläche des Kopplungselements ist im Abstand von der ersten Stirnfläche des Stabilisatorrohrs angeordnet. Bevorzugt ist die Anschlussfläche des Kopplungselements parallel zu der ersten Stirnfläche des Stabilisatorrohrs, bzw. der Schweißverbindung angeordnet. Unter der axialen Richtung des Stabilisatorrohrs wird insbesondere die Längsrichtung des Stabilisatorrohrs verstanden, welche an möglichen Biegestellen der Biegerichtung des Querschnitts des Stabilisatorrohrs folgt.

Die Anschlussfläche des Kopplungselements kann größer als die Querschnittsfläche des Stabilisatorrohrs sein, d.h., die Fläche des Querschnitts des Stabilisatorrohrs, und/oder die Stirnfläche des Stabilisatorrohrs. Beispielsweise kann die Anschlussfläche des Kopplungselements größer als das 1,5-fache, insbesondere größer als das 2-fache der Querschnittsfläche des Stabilisatorrohrs sein. Das Stabilisatorrohr kann über seine Länge eine konstante Querschnittsfläche aufweisen, wobei auch Ausführungen mit variabler Wanddicke über der Länge möglich sind.

Durchmesser und Wanddicke des Stabilisatorrohrs können entsprechend den technischen Anforderungen, beispielsweise den zu übertragenden Kräften ausgewählt werden. Dabei kann ein Stabilisatorrohr beispielsweise einen Innendurchmesser von mindestens 14 mm und/oder bis zu 40 mm aufweisen. Die Wandstärke des Stabilisatorrohrs kann beispielsweise zwischen 2 mm und 7 mm betragen. Die Querschnittsfläche des Stabilisatorrohrs ist insbesondere als Ringfläche zwischen einer Außenkontur und Innenkontur gebildet.

Dadurch, dass das Kopplungselement eine im Abstand von der Stirnfläche angeordnete Anschlussfläche für das Anschlusselement aufweist und die Anschlussfläche bevorzugt größer als die Querschnittsfläche und/oder die Stirnfläche des Stabilisatorrohrs ist, können hohe Verspannkräfte im Kontakt zwischen Anschlusselement und Kopplungselements abgestützt werden. Hierdurch wird eine besonders hohe Festigkeit und robuste Verbindung zwischen Stabilisator und Anschlusselement erreicht.

Die Geometrie des Kopplungselements richtet sich ebenfalls insbesondere nach den zu übertragenden Kräften. Die Anschlussfläche des Adapters ist insbesondere kreisringförmig gestaltet und wird vorzugsweise so dimensioniert, dass die von dem Anschlusselement einwirkenden Spannkräfte sicher abgestützt werden. Beispielsweise kann die Anschlussfläche für ein Koppelelement, das für geringere zu übertragende Kräfte dimensioniert ist, einen Innendurchmesser von mindestens 8 mm und/oder einen Außendurchmesser von mindestens 20 mm aufweisen. Ein Adapterelement, das für größere Kräfte ausgelegt ist, kann eine Anschlussfläche mit einem Innendurchmesser von beispielsweise mindestens 14 mm und/oder einem Außendurchmesser von mindestens 60 mm aufweisen.

Nach einer möglichen Weiterbildung kann das Verbindungsmittel des Kopplungselements als Innengewinde, insbesondere mit einer Gewindegröße von M8 bis M14, gebildet und mit einem Außengewinde des Anschlusselements in Eingriff bringbar sein. Das Außengewinde des Anschlusselements ist beispielsweise an einem Zapfenabschnitt des Anschlusselements gebildet. Das Anschlusselement kann als Kugelzapfen gestaltet sein. Das Außengewinde weist eine der Größe des Innengewindes entsprechende Gewindegröße auf.

Die Form des Kopplungselements, d.h., Länge und Durchmesser des Kopplungselements kann in Abhängigkeit von der Gewindegröße ausgelegt werden.

Die Länge des Kopplungselements kann nach einer Ausführung größer als der Durchmesser des Stabilisatorrohrs, insbesondere der Außendurchmesser, sein. Unter der Länge des Kopplungselements wird ein axialer Abstand zwischen der Anschlussfläche und einer Bodenfläche des Kopplungselements verstanden. Die Anschlussfläche und die Bodenfläche des Kopplungselements sind beispielsweise als Stirnflächen gebildet. Die Gewindegröße des Innengewindes und des Außengewindes wird bevorzugt in Abhängigkeit von dem jeweils vorliegenden Lastfall ausgelegt. Unterschiedliche Lastfälle unterscheiden sich beispielsweise durch verschiedene von dem Anschlusselement über das Kopplungselement auf das Stabilisatorrohr übertragene Kräfte.

Bei einem Gewinde mit einer Gewindegröße von M8 kann das Kopplungselement beispielsweise eine Länge von mindestens 20 mm aufweisen, insbesondere eine Länge zwischen 21 bis 25 mm. Ferner kann ein Kopplungselement bei einem Gewinde mit einer Gewindegröße von M14 beispielsweise eine Länge von mindestens 35 mm aufweisen, insbesondere eine Länge von zwischen 36 und 40 mm. Indem als Verbindungsmittel ein Innengenwinde vorgesehen ist, kann eine einfache und sichere Verbindung des Anschlusselements mit dem Kopplungselement ermöglicht werden. Dadurch, dass die lösbare Gewindeverbindung und das Kopplungselement in Abhängigkeit von dem Lastfall ausgelegt sind, ist der Stabilisator noch flexibler einsetzbar.

Mit einem Kopplungselement, dessen Länge größer als der Durchmesser des Stabilisatorrohrs, insbesondere dem Außendurchmesser der Querschnittsfläche des Stabilisatorrohrs, ist, kann eine Gewindeverbindung zwischen dem Kopplungselement und dem Anschlusselement mit hoher Sicherheit und Festigkeit ermöglicht werden.

Das Kopplungselement weist einen sich von dem konus- bzw. flanschförmigen Fügeabschnitt in Längsrichtung erstreckenden und in dem Endabschnitt des Stabilisatorrohrs angeordneten Einsteckabschnitt auf. Der Einsteckabschnitt kann zumindest teilweise eine zylindrische Form aufweisen und insofern auch als Zylinderabschnitt bezeichnet werden. An einem vom Fügeabschnitt abgewandten Ende ist der Einsteckabschnitt vorzugsweise geschlossen gestaltet sein, das heißt, dass das Kopplungselement weist am Ende des Einsteckabschnitts eine Bodenfläche ohne Öffnungen auf. Durch die geschlossene Struktur des Einsteckabschnitts ist der Innenraum des Stabilisatorrohrs nach außen abgedichtet. Der Einsteckabschnitt ist bevorzugt koaxial zur Rohrachse in dem Stabilisatorrohr angeordnet.

Zwischen dem Einsteckabschnitt des Kopplungselements und der Innenwand des Stabilisatorrohrs ist vorzugsweise ein Radialspalt gebildet. Ein Verpressen der beiden Bauteile miteinander ist nicht vorgesehen. Der Einsteckabschnitt weist vorzugsweise eine zwischen der Bodenfläche und dem Fügeabschnitt angeordnete Mantelfläche auf. Der Radialspalt ist bevorzugt derart gebildet, dass die Mantelfläche des Einsteckabschnitts die Innenwand des Stabilisatorrohrs nicht berührt. Der Radialspalt kann in Umfangsrichtung des Kopplungselements im Wesentlichen einen konstanten Abstand zu der Innenwand des Stabilisatorrohrs aufweisen. Beispielsweise kann der Radialspalt eine Breite bzw. radiale Erstreckung von 0,1 bis 0,5 mm aufweisen. Der Einsteckabschnitt ermöglicht eine einfache und zuverlässige Auslegung des Kopplungselements in Abhängigkeit von der Gewindegröße und gewährleistet zudem, dass große Kräfte durch das massive Kopplungselement abgestützt werden können. Durch den Radialspalt zwischen dem Einsteckabschnitt des Kopplungselements und der Innenwand des Stabilisatorrohrs kann ein Kraftfluss über die Schweißverbindung zwischen der Innenkante bzw. Stirnseite des Stabilisatorrohrs einerseits und dem konusförmigen bzw. flanschförmigen Fügeabschnitt andererseits gewährleistet werden.

Die Stabilität und Festigkeit des Stabilisators wird durch das massive Kopplungselement ermöglicht. Daher können die Dicke der Wandung des Stabilisatorrohrs reduziert und somit die Herstellungskosten für den Stabilisator reduziert werden. Darüber hinaus gewährleistet das vorteilhafte Verhältnis zwischen der Wandungsdicke des Stabilisatorrohrs und der Radialhöhe bzw. radialen Erstreckung des konus- bzw. flanschförmigen Fügeabschnitts, dass das Kopplungselement noch flexibler für eine Vielzahl von Stabilisatorrohren mit unterschiedlichen Durchmessern eingesetzt werden kann.

Das Stabilisatorrohr und das Kopplungselement können nach einer Ausführungsform aus unterschiedlichen Werkstoffen gebildet sein, wodurch die Herstellungskosten des Stabilisators gesenkt werden können, und der Stabilisator noch flexibler an den jeweiligen Lastfall angepasst werden kann. Die unterschiedlichen Werkstoffe sind so gewählt, dass sie miteinander gut verschweißbar sind. Das Stabilisatorrohr ist beispielsweise aus einem niedriglegierten Einsatzstahl, beispielsweise 26MnB5 oder 34Mnb5 gebildet. Das Kopplungselement kann zum Beispiel aus einem Baustahl hergestellt werden.

An bzw. in dem zweiten Endabschnitt des Stabilisatorrohres kann ein weiteres Kopplungselement mit einem konusförmigen Fügeabschnitt angeordnet und über eine mittels Kondensator-Entladungsschweißens zwischen dem konusförmigen Fügeabschnitt und dem Stabilisatorrohr erzeugte Schweißverbindung mit dem Stabilisatorrohr verbunden sein. Alternativ kann an dem zweiten Endabschnitt auch ein weiteres Kopplungselement mit einem flanschförmigen Fügeabschnitt angeordnet und über eine mittels Laserschweißens zwischen dem flanschförmigen Fügeabschnitt und dem Stabilisatorrohr erzeugte Schweißverbindung mit dem Stabilisatorrohr verbunden sein. Die Kopplungselemente eines Stabilisators sind bevorzugt identisch gebildet.

Die Aufgabe wird weiter gelöst durch eine Stabilisatoranordnung für ein Fahrwerk eines Kraftfahrzeugs aus einem vorstehend beschriebenen Stabilisator und mindestens einem lösbar mit dem Kopplungselement verbundenen Anschlusselement. Der Stabilisator kann zwei jeweils lösbar mit einem Kopplungselement verbundene Anschlusselemente aufweisen. Das Anschlusselement kann beispielsweise ein Kugelzapfen einer Koppelstange sein. Die Stabilisatoranordnung kann mittels einer oder mehrerer Anbindungsschellen mit der Fahrzeugkarosserie verbunden werden.

Die Aufgabe wird ferner gelöst durch ein Verfahren zum Herstellen eines Stabilisators gemäß einer der obigen Ausführungsformen für ein Fahrwerk eines Kraftfahrzeugs mit den Schritten:
- Einführen des Kopplungselements in den Endabschnitt des Stabilisatorrohrs, wobei zwischen dem Einsteckabschnitt und dem Stabilisatorrohr ein Ringspalt gebildet ist und der Fügeabschnitt mit dem Endabschnitt in Kontakt kommt, und
- Verbinden des Kopplungselements mit dem Stabilisatorrohr über eine mittels Kondensator-Entladungsschweißens oder mittels Laserstrahlschweißens zwischen dem Fügeabschnitt und dem Stabilisatorrohr erzeugte Schweißverbindung, und
- Biegeumformen des Stabilisatorrohrs nach dem Führen des Kopplungselements.

Das Stabilisatorrohr wird vor dem Einsetzen des Kopplungselements zum Erzeugen des Endabschnitts abgelängt. Das Stabilisatorrohr kann durch Absägen abgelängt werden, wobei ein Entgraten durchgeführt werden kann, um eine definierte Kante zu erzeugen. Das Stabilisatorrohr kann theoretisch auch vor dem Verbinden mit dem Kopplungselement gebogen werden.

Bevorzugte Ausführungsbeispiele der Erfindung werden nachstehend mit Bezug auf die Zeichnungen erläutert. In den Zeichnungen zeigen in schematischer Darstellung:
- Figur 1: eine perspektivische Ansicht eines erfindungsgemäßen Stabilisators für ein Fahrwerk eines Kraftfahrzeugs mit einem Stabilisatorrohr und zwei Kopplungselementen in einer ersten Ausführungsform;
- Figur 2: eine Schnittansicht eines ersten Endabschnitts des Stabilisators von Figur 1;
- Figur 3A: eine perspektivische Ansicht des Kopplungselements von Figur 1 und 2;
- Figur 3B: eine Schnittansicht des Kopplungselements von Figur 3A;
- Figur 4A: eine perspektivische Ansicht eines Kopplungselements in einer modifizierten Ausgestaltung für einen Stabilisator analog Figur 1 bis 3B;
- Figur 4B: eine Schnittansicht des Kopplungselements von Figur 4A;
- Figur 5: eine Stabilisatoranordnung mit dem Stabilisator von Figur 1 und 2 sowie zwei jeweils mit einem Kopplungselement verbundenen Anschlusselementen und
- Figur 6: eine Schnittansicht der Stabilisatoranordnung von Figur 5 an dem ersten Endabschnitt des Stabilisators
- Figur 7A: eine perspektivische Ansicht eines erfindungsgemäßen Stabilisators für ein Fahrwerk eines Kraftfahrzeugs mit Stabilisatorrohr und Kopplungselement in einer zweiten Ausführungsform;
- Figur 7B: eine vergrößerte Darstellung des Endabschnitts des Stabilisators aus Figur 7A;
- Figur 7C: den Endabschnitt des Stabilisators aus Figur 7A im Längsschnitt;
- Figur 8A: das Kopplungselement des Stabilisators aus Figur 7A in einer ersten perspektivischen Ansicht;
- Figur 8B: das Kopplungselement des Stabilisators aus Figur 7A in einer zweiten perspektivischen Ansicht;
- Figur 8C: das Kopplungselement des Stabilisators aus Figur 7A in Axialansicht;
- Figur 8D: das Kopplungselement gemäß Schnittlinie 8D-8D aus Figur 8A.

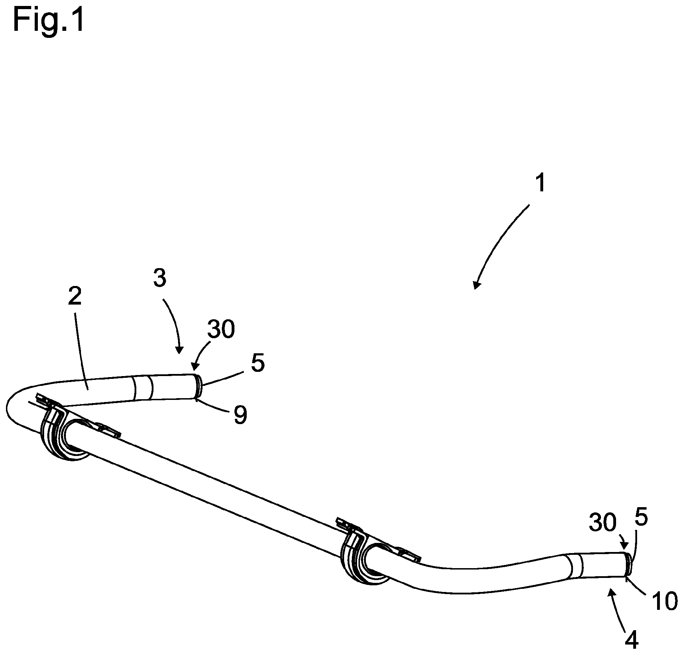

Figur 1 zeigt in schematischer Darstellung eine perspektivische Ansicht eines Stabilisators 1 für ein Fahrwerk eines Kraftfahrzeugs in einer ersten Ausführungsform. Der Stabilisator 1 weist ein Stabilisatorrohr 2 mit einem ersten Endabschnitt 3 und einem zweiten Endabschnitt 4 auf.

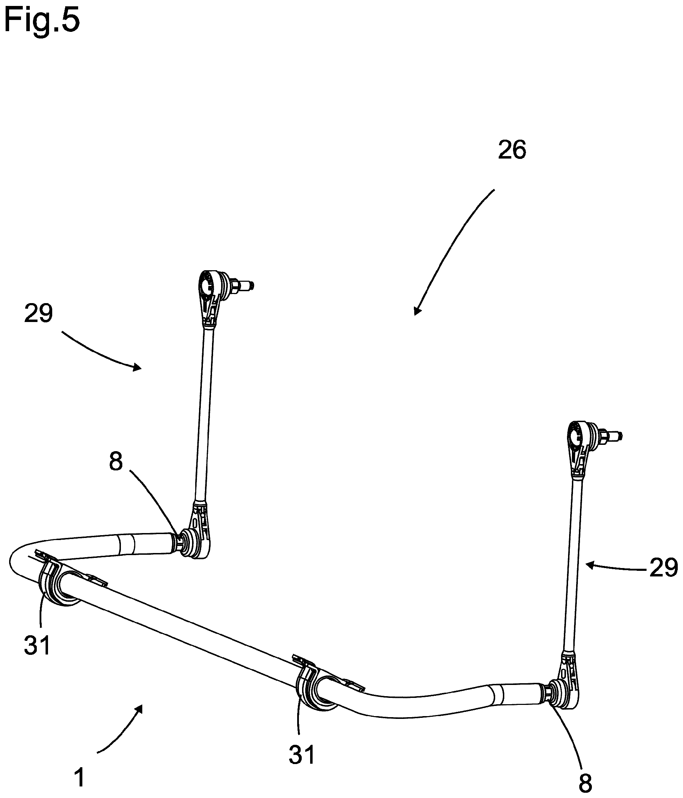

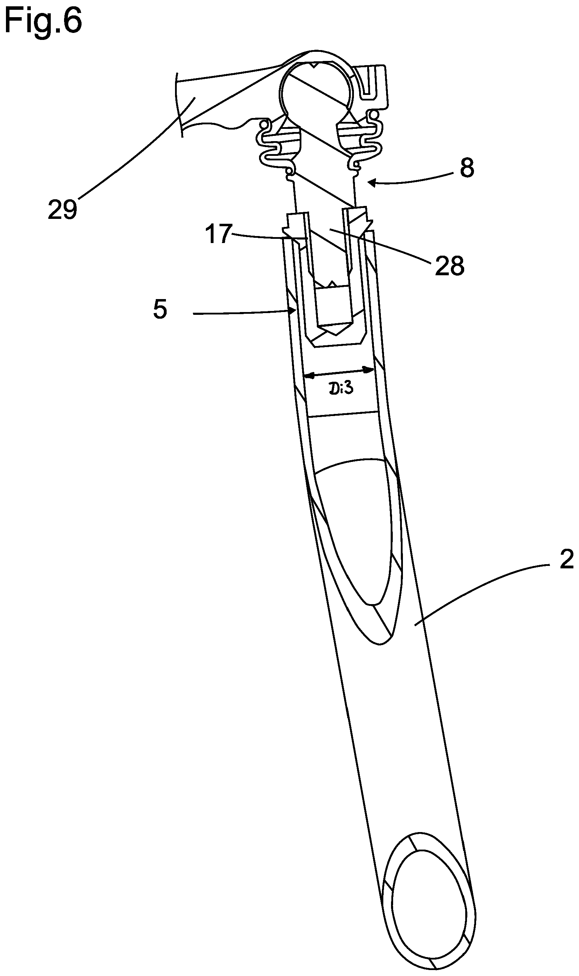

Weiter weist der Stabilisator 1 jeweils ein an dem ersten Endabschnitt 3 und ein an dem zweiten Endabschnitt 4 in dem Stabilisatorrohr 2 eingesetztes Kopplungselement 5 auf. Die Kopplungselemente 5 weisen jeweils einen konusförmigen Fügeabschnitt 6 und ein Verbindungsmittel 7 zum lösbaren Verbinden mit einem Anschlusselement 8 (vgl. Figur 5 und 6) auf.

Das Stabilisatorrohr 2 und das Kopplungselement 5 sind vorliegend aus unterschiedlichen, schweißbaren Werkstoffen gebildet, ohne darauf eingeschränkt zu sein. Beispielsweise kann das Stabilisatorrohr 2 aus einem niedriglegierten Einsatzstahl und das Kopplungselement 5 aus einem Baustahl hergestellt sein.

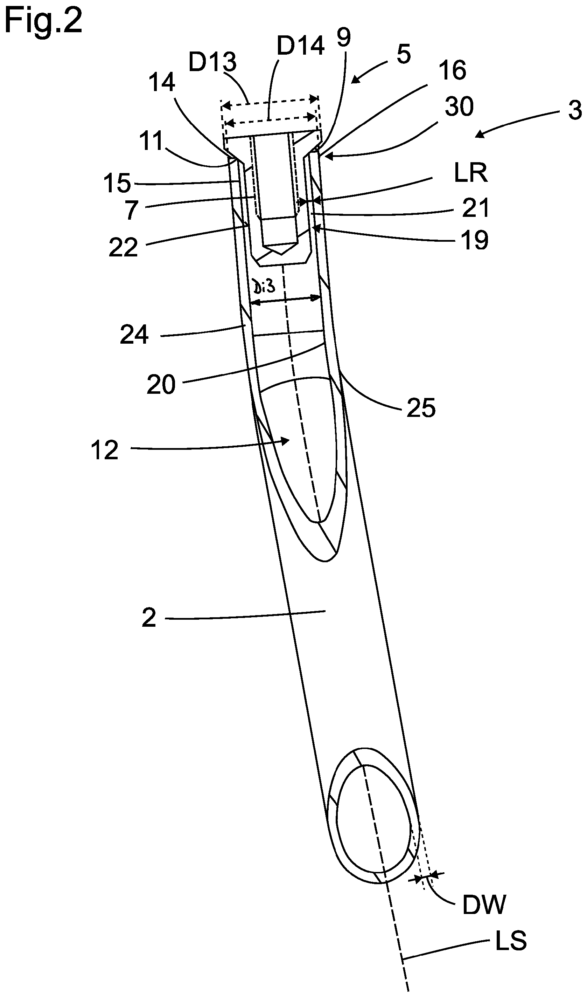

Die Kopplungselemente 5 sind, wie in Figur 2 dargestellt, jeweils mit dem Stabilisatorrohr 2 über eine mittels Kondensator-Entladungsschweißens zwischen dem konusförmigen Fügeabschnitt 6 und dem Stabilisatorrohr 2 erzeugte Schweißverbindung 30 verbunden.

Die Anordnung der Kopplungselemente 5 an dem Stabilisatorrohr 2 ist nachstehend beispielhaft für das an dem ersten Endabschnitt 3 angeordnete Kopplungselement 5 beschrieben.

Das Stabilisatorrohr 2 weist eine an dem ersten Endabschnitt 3 angeordnete erste Stirnfläche 9 und eine an dem zweiten Endabschnitt 4 angeordnete zweite Stirnfläche 10 auf. Das Kopplungselement 5 ist an der ersten Stirnfläche 9 des Stabilisatorrohrs 2 angeordnet und die Schweißverbindung 30 verbindet den konusförmigen Fügeabschnitt 6 des Kopplungselements 5 mit einer Innenkante 11 des Stabilisatorrohrs 2. Die Innenkante 11 des Stabilisatorrohrs 2 ist eine an einen Innenraum 12 des Stabilisatorrohrs 2 angrenzende Kante der ersten Stirnfläche 9.

Das mit dem Stabilisatorrohr 2 verbundene Kopplungselement 5 weist eine über die erste Stirnfläche 9 des Stabilisatorrohrs 2 in axialer Richtung des Stabilisatorrohrs 2 vorstehende Anschlussfläche 13 auf, die als Kontakt- bzw. Spannfläche für das Anschlusselement 8 dienen kann. Die Anschlussfläche 13 des Kopplungselements 5 ist insbesondere im Abstand von und parallel zu der ersten Stirnfläche 9 des Stabilisatorrohrs 2 angeordnet. Ferner ist die Anschlussfläche 13 des Kopplungselements 5 größer als die Querschnittsfläche 14 des Stabilisatorrohrs 2. Die Querschnittsfläche des Stabilisatorrohrs 2 ist als eine Ringfläche 14 zwischen einer Außenkontur 16 und einer Innenkontur 15 definiert.

Die Anschlussfläche 13 des Kopplungselements 5 kann größer als das 1,5-fache, insbesondere größer als das 2-fache der Ringfläche 14 des Stabilisatorrohrs 2 sein. Die Ringfläche 14 des Stabilisatorrohrs 2 kann beispielsweise einen Außendurchmesser D14 von 10 bis 50 mm aufweisen und die Anschlussfläche 13 kann zum Beispiel einen Durchmesser D13 von 15 bis 80 mm aufweisen.

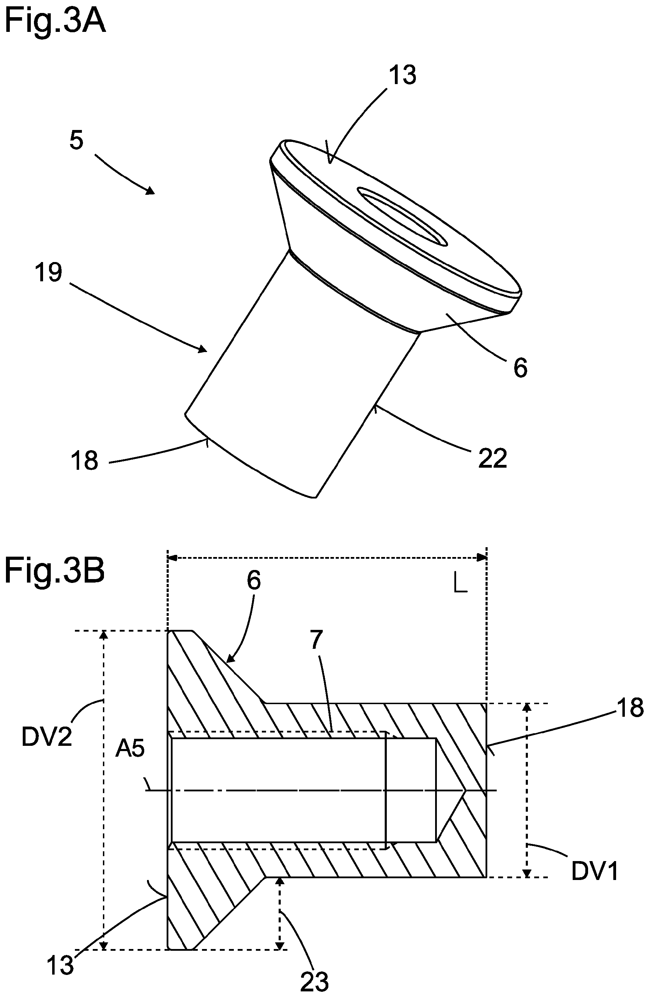

In Figur 3A und 3B ist eine erste Ausführungsform des Kopplungselements 5 dargestellt. Das Verbindungsmittel des Kopplungselements 5 ist als Innengewinde 7, hier beispielsweise mit einer Gewindegröße von M8 bis M14, ausgestaltet und mit einem korrespondierenden Außengewinde 17 des Anschlusselements 8 in Eingriff bringbar (vgl. Figur 6).

Die Form des Kopplungselements 5, d.h., Länge L des Kopplungselements 5 und Durchmesser D13 der Anschlussfläche 13, kann in Abhängigkeit von der Gewindegröße des Innengewindes 7 ausgelegt werden. Die Länge L des Kopplungselements 5 in axiale Richtung ist größer als der Außendurchmesser D14 der Ringfläche 14 des Stabilisatorrohrs 2. Die Länge L des Kopplungselements 5 beschreibt den axialen Abstand zwischen der Anschlussfläche 13 und einer Bodenfläche 18 des Kopplungselements 5.

Die Gewindegröße des Innengewindes 7 und des Außengewindes 17 kann in Abhängigkeit von dem jeweils vorliegenden Lastfall ausgelegt werden. Bei einem Innengewinde 7 mit einer Gewindegröße von M8 kann das Kopplungselement 5 beispielsweise eine Länge L von 19 bis 30 mm aufweisen. Ferner kann das Kopplungselement 5 bei einem Innengewinde 7 mit einer Gewindegröße von M14 beispielsweise eine Länge L von 34 bis 45 mm aufweisen.

Das Kopplungselement 5 weist einen sich in Richtung der Längsachse A5 des Kopplungselements 5 von dem konusförmigen Fügeabschnitt 6 erstreckenden und in dem ersten Endabschnitt 3 des Stabilisatorrohrs 2 angeordneten Einsteckabschnitt 19 auf. Der Einsteckabschnitt 19 ist an einem von dem Fügeabschnitt 6 abgewandten Ende, d.h. an der Bodenfläche 18, geschlossen gebildet. Ferner ist der Einsteckabschnitt 19, wie in Figur 2 dargestellt, koaxial in dem Stabilisatorrohr 2 angeordnet.

Das Kopplungselement 5 und das Stabilisatorrohr 2 sind nicht miteinander verpresst. In radialer Richtung zu der Längsachse A5 des Kopplungselements 5 ist zwischen dem Einsteckabschnitt 19 des Kopplungselements 5 und einer Innenwand 20 des Stabilisatorrohrs 2 ein Radialspalt 21 vorgesehen.

Der Einsteckabschnitt 19 weist eine zwischen der Bodenfläche 18 und dem konusförmigen Fügeabschnitt 6 angeordnete Mantelfläche 22 auf. In Umfangsrichtung zu der Längsachse A5 des Kopplungselements 5 weist der Radialspalt 21 im Wesentlichen einen konstanten Abstand zu der Innenwand 20 des Stabilisatorrohrs 2 auf. Beispielsweise kann der Radialspalt 21 eine Radialerstreckung LR von 0,1 mm bis 0,5 mm aufweisen.

Der konusförmige Fügeabschnitt 6 weist in Bezug auf die Längsachse A5 des Kopplungselements 5 eine Radialhöhe 23 bzw. radiale Erstreckung auf, die das Doppelte bis Fünffache der Dicke DW der Wandung 24 des Stabilisatorrohrs 2 betragen kann. Unter der Radialhöhe 23 wird der halbe Abstand zwischen dem größten Durchmesser DV2 und dem kleinsten Durchmesser DV1 des konusförmigen Verbindungabschnitts 6 verstanden. Die Dicke DW der Wandung 24 des Stabilisatorrohrs 2 beschreibt den Abstand zwischen der Innenwand 20 und einer Außenwand 25 des Stabilisatorrohrs 2. Beispielsweise weist die Wandung 24 eine Dicke DW von 1 mm bis 4 mm, hier zum Beispiel weniger als 2 mm auf.

Die Radialhöhe 23 kann in Abhängigkeit von der erforderlichen Gewindegröße des Innengewindes 7 ausgelegt werden. Beispielsweise kann der konusförmige Fügeabschnitt bei einem Innengewinde 7 mit einer Größe von M8 eine Radialhöhe 23 von 3 bis 6 mm, und bei einem Innengewinde 7 mit einer Größe von M13 eine Radialhöhe 23 von 7 bis 10 mm aufweisen.

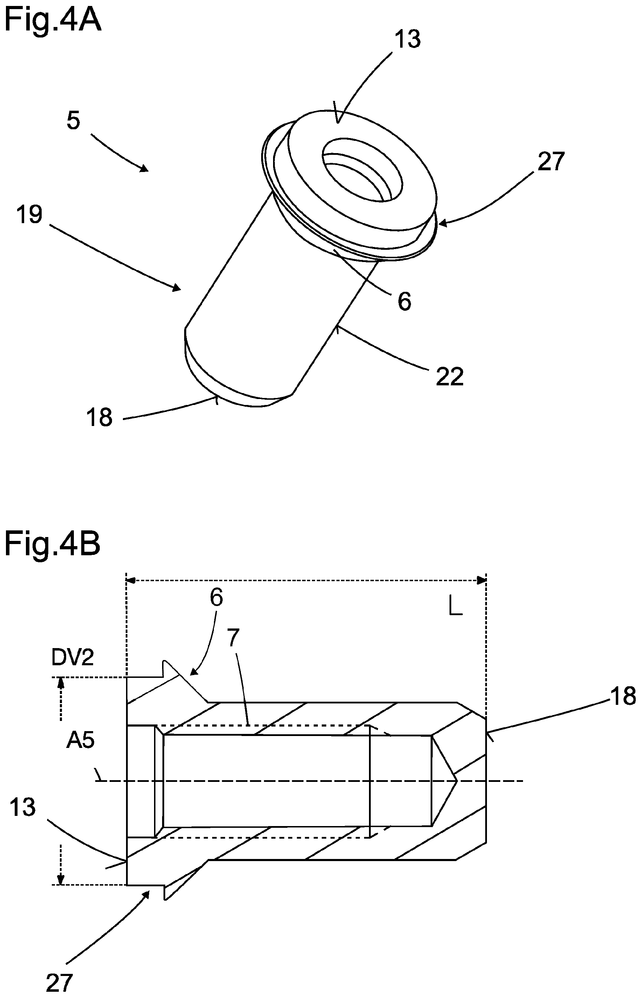

Die Figuren 4A und 4B zeigen eine zweite Ausführungsform des in den Figuren 1 bis 3b gezeigten Kopplungselements 5. Für gleiche Bauteile oder Elemente werden gleiche Bezugszeichen verwendet. Das in den Figuren 4A und 4B gezeigte Kopplungselement 5 unterscheidet sich von dem in den Figuren 1 bis 3B gezeigten Kopplungselement durch eine unterschiedliche Ausgestaltung des konusförmigen Fügeabschnitts 6 und eine die Anschlussfläche 13 verkleinernde Umfangsaussparung 27.

Bei einem Verfahren zum Herstellen des Stabilisators 2 wird das Stabilisatorrohr 2 vor dem Anordnen der Kopplungselemente 5 zum Erzeugen der Endabschnitte 3 ,4 durch Absägen abgelängt. Eine weitere Endbearbeitung der Endabschnitte 3, 4 ist nicht erforderlich. Anschließend werden die Kopplungselemente 5 jeweils an den Endabschnitten 3, 4 in dem Stabilisatorrohr 2 angeordnet. Die konusförmigen Fügeabschnitte 6 sind jeweils mit der Innenkante 11 des Stabilisatorrohrs 2 in Kontakt. Zum Verbinden der Kopplungselemente 5 mit dem Stabilisatorrohr 2 wird an der Kontaktstelle zwischen dem konusförmigen Fügeabschnitt 6 und der Stabilisatorrohr 2 jeweils mittels Kondensator-Entladungsschweißens eine Schweißverbindung erzeugt. Das Stabilisatorrohr 2 wird erst nach dem Verschweißen des Stabilisatorrohrs 2 mit den Kopplungselementen 5 gebogen. Alternativ kann das Stabilisatorrohr 2 vor dem Verschweißen der Kopplungselemente 5 mit dem Stabilisatorrohr 2 gebogen werden.

In den Figuren 5 und 6 ist eine Stabilisatoranordnung 26 für ein Fahrwerk eines Kraftfahrzeugs mit einem Stabilisator 1 und zwei lösbar mit den Kopplungselementen 5 verbundenen Anschlusselementen in Form von Kugelzapfen 18 dargestellt. Das Außengewinde 17 der Kugelzapfen 18 ist jeweils an ein einem Zapfenabschnitt 28 ausgebildet. Das Außengewinde 17 weist eine der Größe des Innengewindes 7 entsprechende Gewindegröße auf. Über die Kugelzapfen 18 ist der Stabilisator 1 jeweils mit einer Koppelstange 29 verbunden. An dem Stabilisatorrohr 2 sind zwei Anbindungsschellen 31 angeordnet.

Der konusförmige Fügeabschnitt 6 der Kopplungselemente 5 ermöglicht, dass die Kopplungselemente 5 mit Stabilisatorrohren 2 verschiedener Durchmesser D14 verbunden werden können.

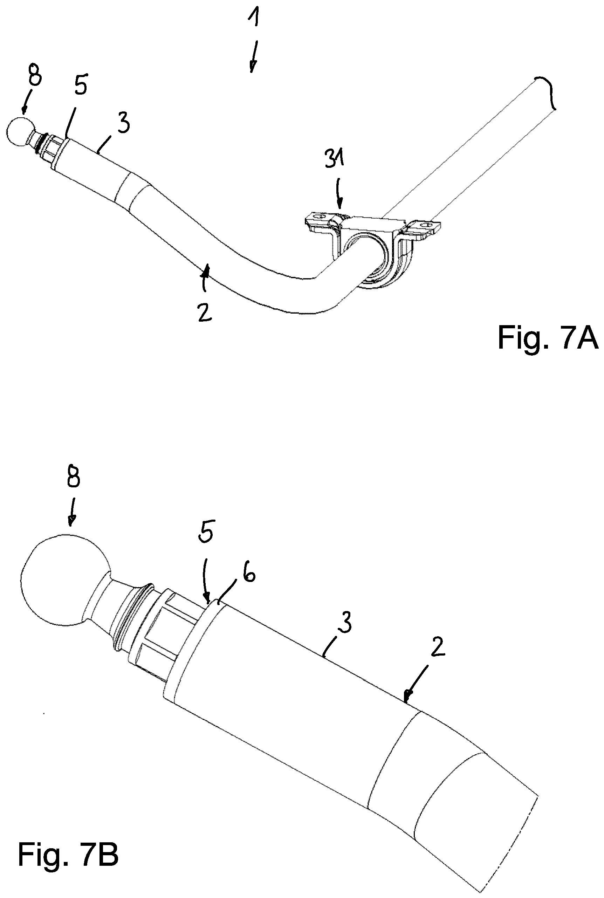

Die Figuren 7A bis 8D, welche nachstehend gemeinsam beschrieben werden, zeigen einen erfindungsgemäßen Stabilisator 1 bzw. ein Kupplungselement 5 in einer weiteren Ausführungsform. Die vorliegende Ausführungsform entspricht in weiten Teilen der Ausführungsform gemäß den Figuren 1 bis 3B, so dass abkürzend auf die obige Beschreibung Bezug genommen wird. Dabei sind gleiche bzw. einander entsprechende Einzelheiten mit gleichen Bezugszeichen versehen, wie in den obigen Figuren.

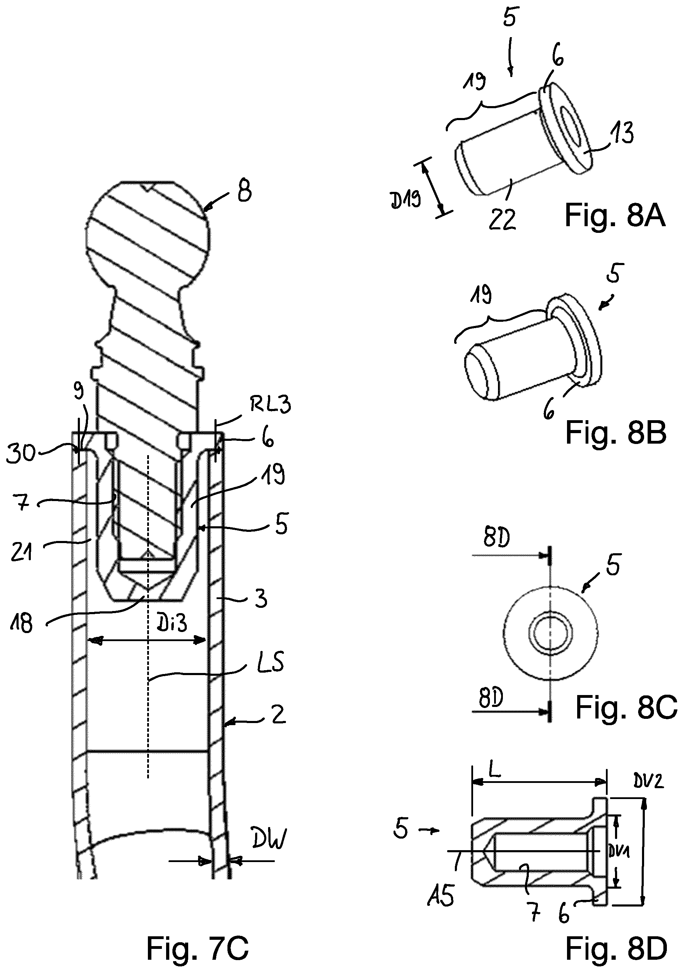

Der in den Figuren 7A bis 8D gezeigte Stabilisator 1 unterscheidet sich von den obigen Ausführungen durch eine unterschiedliche Ausgestaltung des Kopplungselement 5. Wie insbesondere aus den Figuren 8A bis 8D erkennbar, hat das Kopplungselement 5 einen flanschförmigen Fügeabschnitt 6, an den sich der Einsteckabschnitt 19 axial anschließt. Das Kopplungselement 5 wird mit seiner Längsachse A5 koaxial zur Rohrachse LS in das Rohr eingesetzt, wobei der Flanschabschnitt mit der Stirnseite des Rohres in Anlage kommt. Der flanschförmige Fügeabschnitt 6 hat einen größeren Außendurchmesser DV2 als der Endabschnitt 3 des Stabilisatorrohrs 2. Ferner hat der Einsteckabschnitt 19 einen kleineren Außendurchmesser D19 als der Innendurchmesser Di3 des Endabschnitts 3 des Stabilisatorrohrs 2.

Erfindungsgemäß ist vorgesehen, dass die Schweißverbindung 30 durch eine um die Rohrachse LS bzw. Längsachse A5 des Kopplungselements 5 umlaufende Schweißnaht mittels Laserschweißen gebildet wird. Der Laserstrahl ist axial ausgerichtet und hat eine radiale Überdeckung mit der Stirnfläche 9 des Rohrendes. Auf diese Weise strahlt der Laser axial durch den Flanschabschnitt 6 hindurch in die Stirnseite des Rohres, so dass die Stirnseite des Rohres mit der Unterseite des Flanschabschnitts verschmilzt und stoffschlüssig verbunden wird. Die Schweißung erfolgt in Umfangsrichtung als ringförmig geschlossene Schweißnaht 30. Wie insbesondere in Figur 7C erkennbar ist, liegt die Schweißnaht 30 insbesondere radial außerhalb einer mittleren Ringlinie RL3 des Endabschnitts 3. Die mittlere Ringlinie RL3 ist eine gedachte Linie, welche in Axialansicht betrachtet mittig zwischen der Außenumfangskante und der Innenumfangskante des Rohres gebildet ist. Die Schweißnaht kann einen Schweißnahtdurchmesser von weniger als 0,75 mm aufweisen. Mittels Laserschweißen können Schweißverbindungen mit hoher Präzision effizient hergestellt werden. Dabei bietet das Laserschweißen dieselben Vorteile analog zum Kondensator-Entladungsschweißen. Dadurch, dass stirnseitig verschweißt wird, wird die Adaption auf verschiedene Rohrabmessungen über die Auflagefläche des Kopplungselements 5 bzw. Inserts gewährleistet.

Alle in Verbindung mit einzelnen Ausführungsformen der Erfindung erläuterten Merkmale können in unterschiedlicher Kombination für den Stabilisator 1 und die Stabilisatoranordnung 26 sowie das Verfahren zum Herstellen des Stabilisators 1 vorgesehen sein, um deren vorteilhafte Wirkungen zu realisieren, auch wenn diese zu unterschiedlichen Ausführungsformen beschrieben worden sind. Beispielsweise weist die Stabilisatoranordnung 26 Kopplungselemente 5 auf, die auch für einen Stabilisator gemäß Figur 1 verwendet werden können. Oder, umgekehrt, kann auch das Koppelelement aus Figur 1 für einen Stabilisator gemäß Figur 5, 6 verwendet werden.

### Bezugszeichenliste

- 1: Stabilisator
- 2: Stabilisatorrohr
- 3: erster Endabschnitt
- 4: zweiter Endabschnitt
- 5: Kopplungselement
- 6: Fügeabschnitt
- 7: Verbindungsmittel (Innengwinde)
- 8: Anschlusselement (Kugelzapfen)
- 9: erste Stirnfläche
- 10: zweite Stirnfläche
- 11: Innenkante
- 12: Innenraum
- 13: Anschlussfläche
- 14: Querschnittsfläche (Ringfläche)
- 15: Innenkontur
- 16: Außenkontur
- 17: Außengewinde
- 18: Bodenfläche
- 19: Einsteckabschnitt
- 20: Innenwand
- 21: Radialspalt
- 22: Mantelfläche
- 23: Radialhöhe
- 24: Wandung
- 25: Außenwand
- 26: Stabilisatoranordnung
- 27: Umfangsnut
- 28: Zapfenabschnitt
- 29: Koppelstange
- 30: Schweißverbindung
- 31: Anbindungsschelle
- A5: Achse
- D13: Durchmesser der Anschlussfläche
- D14: Durchmesser der Ringfläche des Stabilisatorrohrs
- DV1: kleinster Durchmesser des Fügeabschnitts
- DV2: größter Durchmesser des Fügeabschnitts
- DW: Dicke der Wandung
- L: Länge des Kopplungselements
- LR: Radialerstreckung des Radialspalts
- LS: Längsrichtung des Stabilisatorrohrs

## Patentansprüche

1. Stabilisator für ein Fahrwerk eines Kraftfahrzeugs, umfassend:
ein Stabilisatorrohr (2) mit einem Endabschnitt (3) und einer Rohrachse (LS), und
ein Kopplungselement (5) mit einem Einsteckabschnitt (19), einem konusförmigen Fügeabschnitt (6) und einem Verbindungsmittel (7) zum lösbaren Verbinden eines Anschlusselements (8),
wobei das Kopplungselement (6) mit seinem Einsteckabschnitt (19) in dem Endabschnitt (3) des Stabilisatorrohrs (2) angeordnet ist,
**dadurch gekennzeichnet,**
**dass** zwischen dem Einsteckabschnitt (19) und einer Innenwand (20) des Stabilisatorrohrs (2) ein Radialspalt (21) ausgebildet ist, und
das Kopplungselement (6) mit dem Stabilisatorrohr (2) über eine mittels Kondensator-Entladungsschweißens erzeugte Schweißverbindung (30) zwischen dem konusförmigen Fügeabschnitt (6) und dem Stabilisatorrohr (2) gefügt ist.

2. Stabilisator nach Anspruch 1,
**dadurch gekennzeichnet,**
**dass** der konusförmige Fügeabschnitt (6) des Kopplungselements (5) mittels der Schweißverbindung (30) mit einer Innenkante (11) an einer Stirnfläche (9) des Stabilisatorrohrs (2) verbunden ist.

3. Stabilisator nach einem der Ansprüche 1 oder 2,
**dadurch gekennzeichnet,**
**dass** das Kopplungselement (5) eine über das Ende des Stabilisatorrohrs (2) in axialer Richtung vorstehende Anschlussfläche (13) aufweist, um das Anschlusselement (8) axial abzustützen.

4. Stabilisator nach Anspruch 3,
**dadurch gekennzeichnet,**
**dass** die Anschlussfläche (13) des Kopplungselements (5) größer als eine Querschnittsfläche (14) des Stabilisatorrohrs (2) ist.

5. Stabilisator nach einem der Ansprüche 1 bis 4,
**dadurch gekennzeichnet,**
**dass** das Verbindungsmittel des Kopplungselements (5) als Innengewinde (7), insbesondere mit einer Gewindegröße von M8 bis M14, gebildet ist und mit einem Außengewinde (17) des Anschlusselements (8) in Eingriff bringbar ist.

6. Stabilisator nach einem der Ansprüche 1 bis 5,
**dadurch gekennzeichnet,**
**dass** eine Länge (L) des Kopplungselements (5) in Längsrichtung größer als ein Durchmesser (D14) des Stabilisatorrohrs (2) ist.

7. Stabilisator nach einem der Ansprüche 1 bis 6,
**dadurch gekennzeichnet,**
**dass** der Einsteckabschnitt (19) an einem von dem Fügeabschnitt (6) abgewandten Ende geschlossen gestaltet ist.

8. Stabilisator nach einem der Ansprüche 1 bis 7,
**dadurch gekennzeichnet,**
**dass** der Fügeabschnitt (6) in radialer Richtung zu der Längsachse (A5) des Kopplungselements (5) eine Radialhöhe (23) aufweist, die größer als das 2-fache und kleiner als das 5-fache einer Wandungsdicke (DW) des Stabilisatorrohrs (2) ist.

9. Stabilisator nach wenigstens einem der Ansprüche 1 bis 8,
**dadurch gekennzeichnet,**
**dass** das Stabilisatorrohr (2) und das Kopplungselement (5) aus unterschiedlichen Werkstoffen gebildet sind.

10. Stabilisator nach wenigstens einem der Ansprüche 1 bis 9,
**dadurch gekennzeichnet,**
**dass** an einem zweiten Endabschnitt (4) des Stabilisatorrohrs (2) ein weiteres Kopplungselement (5) mit einem Fügeabschnitt (6) angeordnet ist und über eine mittels Schweißens zwischen dem Fügeabschnitt (6) und dem Stabilisatorrohr (2) erzeugte Schweißverbindung (30) mit dem Stabilisatorrohr (2) verbunden ist.

11. Verfahren zum Herstellen eines Stabilisators für ein Fahrwerk eines Kraftfahrzeugs nach einem der Ansprüche 1 bis 10, mit den Schritten:
- Einsetzen des Kopplungselements (5) in den Endabschnitt (3) des Stabilisatorrohres (2), wobei zwischen dem Einsteckabschnitt (19) und dem Stabilisatorrohr (2) ein Ringspalt (21) gebildet wird und der Fügeabschnitt (6) mit dem Endabschnitt (3) in Kontakt kommt,
- Verbinden des Kopplungselements (5) mit dem Stabilisatorrohr (2) mittels Kondensator-Entladungsschweißens oder Laserstrahlschweißens, wobei zwischen dem Fügeabschnitt (6) des Kopplungselements (5) und dem Stabilisatorrohr (2) eine Schweißverbindung (30) erzeugt wird, und
- Biegeumformen des Stabilisatorrohrs (2) nach dem Fügen des Kopplungselements (5) mit dem Stabilisatorrohr.
